# EUROPEAN PATENT SPECIFICATION

(11) **EP 1 257 595 B1**
(45) Date of publication and mention of the grant of the patent: **31.03.2010**
(21) Application number: 01909956.3
(22) Date of filing: 26.02.2001
(51) Int. Cl.: C08K 7/06, C08K 13/04, C08L 71/12

(54) **LIGHT WEIGHT ABLATIVE MATERIALS**
LEICHTE ABLATIVE MATERIALIEN
MATERIAUX ABLATIFS LEGERS

(30) Priority: 25.02.2000 GB 0004347
(43) Date of publication of application: 20.11.2002
(73) Proprietor: VICTREX MANUFACTURING LIMITED, Thornton Cleveleys Lancashire FY5 4QD (GB)
(72) Inventor: KEMMISH, David John, Preston, Lancashire PR4 0WG (GB); LEIBFRIED, Richard Thomas, Victrex USA, Inc., Chester Springs, PA 19425 (US)
(74) Representative: Brierley, Anthony Paul
(86) International application number: PCT/GB2001/000779
(87) International publication number: WO 2001/062841

(56) References cited:
- EP-A- 0 182 580
- EP-A- 0 225 750
- EP-A- 0 392 408
- EP-A- 0 484 985
- WO-A-88/07169
- WO-A-96/41836
- US-A- 5 352 312
- US-A- 5 498 649

## Description

### Background to the Invention

The present invention is directed to light weight ablative materials comprised of polyaryletherketones, fibres, minerals, and optionally foaming agents and/or some combination thereof.

The ablative art is principally concerned with materials for use as structural components for high temperature environments. A problem known to those skilled in the ablative art is the lack of light weight thermoplastic materials that can withstand the heat in an oxidizing environment and maintain structural integrity during high heat flux exposure. Light weight is desired to reduce the overall weight of the structure, thus decreasing the load.

The dynamic often associated with carbon based materials when subjected to heat and oxygen is the oxidation of the materials to carbon gases, resulting in the loss of material structure and function. The present invention combines materials based on light weight carbon compositions often eschewed as ablative materials because of the heat/oxidation dynamic. The compositions of this invention incorporate the dynamic and, surprisingly, are calculated to provide ablative materials that maintain structure and function.

Polyetheretherketone (e.g. PEEK^{™} available from Victrex Plc, U.K.) is known as a light weight material capable of retaining mechanical properties at high temperatures. However, polyetheretherketone melts at 340 degrees centigrade and at higher temperatures decomposes to produce a black carbonaceous char which oxidizes and/or spalls off the structure in chunks. As a consequence, polyetheretherketone has not been considered for use in environments which generate heat greater than its melting point. The present invention contemplates heat resilient ingredients and structural reinforcers that extend the useful temperature of polyetheretherketone materials.
This results in a light weight composite material useful for ablative purposes.

Ablative materials are generally useful for missiles, especially the fins of missiles. The materials of the present invention are found useful as ablative material, but may be used in environments which are as or less demanding as those confronted by ablative materials.
US-5 352 312, WO-88/07169 and EP-484985 disclose ablative materials on the basis of PEEK and reinforcing fillers.

### Summary of the Invention

The ablative material is as described in claim 1 hereinafter. Preferably, the polyarlyetherketone, further discussed in "Polyetheretherketone" by D. J Kemmish, in Rapra Review vol. 2, No. 2, 1988 is comprised of polyetheretherketone (e.g. PEEK^{™}), polyetherketone (e.g. PEK^{™} of Victrex Plc, U.K.), polyetherketoneetherketoneketone, (PEKEKK), polyetherketoneketone (PEKK), polyetheretherketoneketone (PEEKK), copolymers thereof such as sulfone and/or biphenyl containing polymers, and combinations thereof and therebetween. Most preferably the polyaryletherketone is comprised of polyetheretherketone and/or polyetherketone.
The thermoplastic is suitably present by weight percent from 40 to 80 percent, and most preferably from 48 to 70 percent.

The reinforcing additive is suitably comprised of platey, fiberous and/or whiskers of organic and/or inorganic materials. The organic materials are comprised of carbon fibres, aramid fibres. The inorganic materials are comprised of glass such as quartz, silicates, borates, and/or aluminates, ceramics such as borides, nitrides, and/or ceramics or glass comprised of elements from the first, second and/or third transition series, metallic additives comprised of elements from the first, second, and/or third transition series and/or combinations thereof and therebetween. Preferably, the reinforcing additive is comprised of carbon and/or glass fibres, and most preferably carbon fibres. The reinforcing additive is suitably present by weight percent from 3 to 70 percent, preferably from 10 to 50 percent, most preferably from 20 to 40.

The mineral additive is suitably comprised of any material that can be processed at the thermoplastic processing temperatures up to about 430 degrees centigrade.

Preferably, said minerals comprise talc, vermiculite, mica, quartz, any of the endothermically decomposing minerals, and/or combinations thereof and therebetween and most preferably talc. The mineral additive is present by weight percent from 2 to 50 percent, preferably 2 to 30 percent, and most preferably 3 to 20 percent.

Preferably, the foaming agent is comprised of fluoropolymers, chloropolymers, and/or chlorofluoropolymers, and most preferably polytetrafluoroethylene (PTFE). The foaming agent may be present at up to 49 percent, preferably up to 30 percent, and most preferably up to 15 percent.
Suitably, the foaming agent is present at a level of at least 2 weight percent, more preferably at least 3 weight percent.

The invention extends to the use of a material described above as an ablative material.

The invention extends to the use of an ablative material as described above for dissipating heat from a substrate.

The invention extends to a method of dissipating heat from a substrate, the method using an ablative material as described above.

The invention extends to a method of preparing a structure for use in a high temperature environment, the method comprising associating with the structure an ablative material as described above.

The invention extends to a structural component for use in a high temperature environment, said component including an ablative material as described above.

A high temperature environment may be an environment wherein the temperature is at least 400°C, at least 600°C or at least 800°C.

In its most general form, the thermoplastic ablative compositions are mixed in the following manner. As known to those skilled in this art, the compositions disclosed herein may be mixed in batch form or may be incrementally mixed as the composition is processed. The thermoplastic component in either pellet or powdered form is mixed with powdered mineral, reinforcing additive, mixed in a blender, and then melt processed. Sometimes, the mixing is performed during the melt processing dependent upon the type of extruder in use. The melt processed product is then allowed to cool to room temperature. Optionally, the foaming agent is admixed during the mixture of the thermoplastic, reinforcing, and mineral components.

Specific embodiments of the invention will now be described, by way of example.

### Example 1

7.9 kilograms of 450PC Victrex PEEK^{™} (obtainable from Victrex Plc, U.K.), 4.1 kilograms of Fortafil carbon fibre (obtained from Akzo), 817 grams of PTFE TL-156 (obtained from ICI), and 817 grams of talc Mistron Super Frost (obtained from Cypress Industrial Minerals) were tumble blended in a Marion Blender producing a premix. The premix was fed to a 6.35 centimetre single screw extruder producing an extruded lace. The extruded lace was cooled to solidification and pelletized producing pellets of approximately .31 by .31 centimetre cylinders. 7 grams of a stearate salt was added. The pellets were dried for 3 hours at 150 degrees centigrade and then injection moulded producing .31 x 15.2 x 7.6 centimetre plaques.

The plaques were then positioned vertically lengthwise by clamps at the top of the cylinders and the bottom of the cylinder resting on a surface. The plaques were exposed to a flame from a propane torch at approximately 1200 degrees centigrade for ten minutes. During this test the surface of the plaques were observed to evolve volatiles forming a foam product adhering to the heat treated plaque surface. The foam product was determined to be a crosslinked carbonaceous polyetheretherketone degradation product. The surface of the foam was observed to glow at red heat during the test however, no foam burn through or plaque sag was observed or detected due to this testing procedure. The foamed surface was observed to have glazed at the places where the heat was most intense, indicating some hardened glassy and/or ceramic product had been formed. It is important to note that no burn through of the foamed product was observed. Burn through means for this analysis, that the foam product exposed to the direct flame was vaporised producing a flame channel within the foam product during this flame test.

### Comparative Example 2

Example 2 was produced similarly to Example 1 except that the amount of talc was doubled to 1.6 kilograms and the PTFE was omitted. All other processing parameters remained the same. During the burn through test, foaming was observed to occur but to a lesser extend than that observed in Example 1. The foamed surface was observed to be highly resistant to burn through, some plaque sag occurred.

### Comparative Example 3

Example 3 was produced similarly to Example 1 except that the amount of polyetheretherketone was 7.5 kilograms, the amount of carbon fibre was changed to 4.1 kilograms, and the amount of PTFE was 2.1 kilograms. No talc was added to this Example. During the flame test a high degree of foaming was observed. In addition rapid burn through was observed in this sample and plaque sag was observed.

### Comparative Example 4

Example 4 was produced similarly to Example 1 except that the amount of polyetheretherketone was 9.5 kilograms and the amount of carbon fibre was changed to 4.1 kilograms. Neither talc nor PTFE was added to this batch. During the flame test some foaming occurred. In addition rapid burn through was observed in this sample and plaque sag was observed.

### Comparative Example 5

Example was produced similarly to Example 1 except that polyetheretherketone was the only component in the example. No carbon fibre, PTFE, nor talc was added to this batch. During the flame test the surface started to foam but the material rapidly melted away from the flame.

The following mechanical properties shown in Table 1 were determined for Examples 1, 2 and 4.

**Table 1**

| **Mechanical Property** | **Example 1** | **Example 2** | **Example 4** |
|---|---|---|---|
| Tensile Strength, psi | 32,000 | 30,000 | 33,000 |
| Tensile Elongation, % | 2.0 | 1.8 | 3.6 |
| Flexural Modulus 10⁶ | 3.2 | 3.0 | 2.9 |
| Notched Izod ft lbs/in | 1.55 | 1.37 | 1.8 |

Notably the properties observed in Example 1, the composition of this invention, are comparable to those in Example 4, known for desirable mechanical properties for other than ablative purposes. The addition of either PTFE and talc or talc alone had no significant effect on the mechanical properties but added a new desirable ablative property and use in its resistance to a high heat flux.

## Claims

1. An ablative material comprising 25 to 95wt% of a polyaryletherketone, 3 to 70wt% of a reinforcing agent, 2 to 50wt% of a mineral and at least 1wt% of a foaming agent which comprises a halopolymer.

2. An ablative material according to Claim 1 wherein said polyaryletherketone is selected from polyetheretherketone, polyetherketone, polyetherketoneetherketoneketone, polyetherketoneketone, polyetheretherketoneketone, copolymers thereof and/or combinations thereof and therebetween.

3. An ablative material according to Claim 1 or Claim 2, wherein said polyaryletherketone is polyetheretherketone and/or polyetherketone and/or some combination thereof and therebetween.

4. An ablative material according to any preceding claim, wherein said polyaryletherketone is polyetheretherketone.

5. An ablative material according to any preceding claim, wherein said reinforcing agent comprises organic and/or inorganic materials.

6. An ablative material according to any preceding claim, wherein said reinforcing agent is comprised of carbon fibres.

7. An ablative material according to any preceding claim, wherein said reinforcing agent is comprised of glass.

8. An ablative material according to any preceding claim, wherein said mineral is comprised of endothermically decomposing materials.

9. An ablative material according to any preceding claim, wherein said mineral is comprised of talc.

10. An ablative material according to any preceding claim, wherein said mineral is comprised of talc, vermiculite, mica, quartz, and/or combinations thereof and therebetween.

11. An ablative material according to any preceding claim, comprising 40 to 80 weight percent thermoplastic material, 10 to 50 weight percent reinforcing agent, and 2 to 30 weight percent mineral.

12. An ablative material according to any preceding claim, comprising 48 to 70 weight percent thermoplastic material, 20 to 40 weight percent reinforcing agent, and 3 to 20 weight percent mineral.

13. An ablative material according to any preceding claim, comprising at least 2 weight percent of said foaming agent.

14. An ablative material according to any preceding claim comprising at least 3 weight percent of said foaming agent.

15. An ablative material according to any preceding claim, wherein said halopolymer is selected from fluoropolymers, chloropolymers and chlorofluoropolymers.

16. An ablative material according to any preceding claim, wherein said foaming agent comprises PTFE.

17. An ablative material comprising 25 to 95 weight percent of a polyaryletherketone, 3 to 70 weight percent of a reinforcing agent, 2 to 50 weight percent of a mineral selected from the group consisting of talc, vermiculite, mica, and quartz, and at least 1 weight percent of a halo polymer foaming agent.

18. An ablative material according to any preceding claim, wherein said reinforcing agent is comprised of platey, fibrous and/or whiskers of organic and/or inorganic materials.

19. Use of a material according to any of Claims 1 to 18 as an ablative material.

20. Use of an ablative material according to any of Claims 1 to 18 for dissipating heat from a substrate.

21. A method of dissipating heat from a substrate, the method using an ablative material according to any of Claims 1 to 18.

22. A method of preparing a structure for use in a high temperature environment, the method comprising associating with the structure an ablative material according to any of Claims 1 to 18.

23. A structural component for use in a high temperature environment, said component including an ablative material according to any of Claims 1 to 18.

24. A component according to claim 23 which comprises a missile fin.

## Patentansprüche

1. Ablatives Material, umfassend 25 bis 95 Gew.-% eines Polyaryletherketons, 3 bis 70 Gew.-% eines Verstärkungsmittels, 2 bis 50 Gew.-% eines Minerals und zumindest 1 Gew.-% eines Schaummittels, welches ein Halogenpolymer umfasst.

2. Ablatives Material nach Anspruch 1, wobei das Polyaryletherketon ausgewählt ist aus Polyetheretherketon, Polyetherketon, Polyetherketonetherketonketon, Polyetherketonketon, Polyetheretherketonketon, Copolymeren davon und/oder Kombinationen davon und dazwischen.

3. Ablatives Material nach Anspruch 1 oder Anspruch 2, wobei das Polyaryletherketon ein Polyetheretherketon und/oder ein Polyetherketon und/oder irgendeine Kombination davon und dazwischen ist.

4. Ablatives Material nach einem der vorangegangenen Ansprüche, wobei das Polyaryletherketon Polyetheretherketon ist.

5. Ablatives Material nach einem der vorangegangenen Ansprüche, wobei das Verstärkungsmittel organische und/oder anorganische Materialien umfasst.

6. Ablatives Material nach einem der vorangegangenen Ansprüche, wobei das Verstärkungsmittel Kohlenstofffasern umfasst.

7. Ablatives Material nach einem der vorangegangenen Ansprüche, wobei das Verstärkungsmittel Glas umfasst.

8. Ablatives Material nach einem der vorangegangenen Ansprüche, wobei das Mineral endothermisch zersetzende Materialien umfasst.

9. Ablatives Material nach einem der vorangegangenen Ansprüche, wobei das Mineral Talk umfasst.

10. Ablatives Material nach einem der vorangegangenen Ansprüche, wobei das Mineral Talk, Vermiculit, Glimmer, Quarz und/oder Kombinationen davon und dazwischen umfasst.

11. Ablatives Material nach einem der vorangegangenen Ansprüche, umfassend 40 bis 80 Gew.-% thermoplastisches Material, 10 bis 50 Gew.-% Verstärkungsmittel, und 2 bis 30 Gew.-% Mineral.

12. Ablatives Material nach einem der vorangegangenen Ansprüche, umfassend 48 bis 70 Gew.-% thermoplastisches Material, 20 bis 40 Gew.-% Verstärkungsmittel und 3 bis 20 Gew.-% Mineral.

13. Ablatives Material nach einem der vorangegangenen Ansprüche, umfassend zumindest 2 Gew.-% des Schaummittels.

14. Ablatives Material nach einem der vorangegangenen Ansprüche, umfassend zumindest 3 Gew.-% des Schaummittels.

15. Ablatives Material nach einem der vorangegangenen Ansprüche, wobei das Halogenpolymer ausgewählt ist aus Fluorpolymeren, Chlorpolymeren und Chlorfluorpolymeren.

16. Ablatives Material nach einem der vorangegangenen Ansprüche, wobei das Schaummittel PTFE umfasst.

17. Ablatives Material, umfassend 25 bis 95 Gew.-% eines Polyaryletherketons, 3 bis 70 Gew.-% eines Verstärkungsmittels, 2 bis 50 Gew.-% eines Minerals ausgewählt aus der Gruppe bestehend aus Talk, Vermiculit, Glimmer und Quarz, und zumindest 1 Gew.-% eines Halogenpolymerschaummittels.

18. Ablatives Material nach einem der vorangegangenen Ansprüche, wobei das Verstärkungsmittel plättchenartige, faserartige und/oder Whisker organischer und/oder anorganischer Materialien umfasst.

19. Verwendung eines Materials nach einem der Ansprüche 1 bis 18 als ein ablatives Material.

20. Verwendung eines ablativen Materials nach einem der Ansprüche 1 bis 18 zum Ableiten von Wärme von einem Substrat.

21. Verfahren zum Ableiten von Wärme von einem Substrat, wobei das Verfahren ein ablatives Material nach einem der Ansprüche 1 bis 18 verwendet.

22. Verfahren zur Anfertigung einer Struktur zur Verwendung in einer Hochtemperaturumgebung, wobei das Verfahren das Assoziieren eines ablativen Materials nach einem der Ansprüche 1 bis 18 mit der Struktur umfasst.

23. Baugruppe zur Verwendung in einer Hochtemperaturumgebung, wobei die Gruppe ein ablatives Material nach einem der Ansprüche 1 bis 18 beinhaltet.

24. Gruppe nach Anspruch 23, welche eine Flugkörperflosse umfasst.

## Revendications

1. Matériau ablatif comprenant 25 à 95 % en poids d'une polyaryléthercétone, 3 à 70 % en poids d'un agent de renfort, 2 à 50 % en poids d'un minéral et au moins 1 % en poids d'un agent moussant qui comprend un halopolymère.

2. Matériau ablatif selon la revendication 1, dans lequel ladite polyaryléthercétone est choisie parmi la polyétheréthercétone, la polyéthercétone, la polyéthercétoneéthercétonecétone, la polyéthercétonecétone, la polyétheréthercétonecétone, des copolymères de celles-ci et/ou des combinaisons de celles-ci et entre elles.

3. Matériau ablatif selon la revendication 1 ou la revendication 2, dans lequel ladite polyaryléthercétone est une polyétheréthercétone et/ou une polyéthercétone et/ou certaines combinaisons de celles-ci et entre elles.

4. Matériau ablatif selon l'une quelconque des revendications précédentes, dans lequel ladite polyaryléthercétone est une polyétheréthercétone.

5. Matériau ablatif selon l'une quelconque des revendications précédentes, dans lequel ledit agent de renfort comprend des matériaux organiques et/ou inorganiques.

6. Matériau ablatif selon l'une quelconque des revendications précédentes, dans lequel ledit agent de renfort comprend des fibres de carbone.

7. Matériau ablatif selon l'une quelconque des revendications précédentes, dans lequel ledit agent de renfort comprend du verre.

8. Matériau ablatif selon l'une quelconque des revendications précédentes, dans lequel ledit minéral comprend des matériaux se décomposant endothermiquement.

9. Matériau ablatif selon l'une quelconque des revendications précédentes, dans lequel ledit minéral comprend du talc.

10. Matériau ablatif selon l'une quelconque des revendications précédentes, dans lequel ledit minéral comprend du talc, de la vermiculite, du mica, du quartz, et/ou des combinaisons de ceux-ci et entre eux.

11. Matériau ablatif selon l'une quelconque des revendications précédentes, comprenant 40 à 80 % en poids de matériau thermoplastique, 10 à 50 % en poids d'un agent de renfort, et 2 à 30 % en poids de minéral.

12. Matériau ablatif selon l'une quelconque des revendications précédentes, comprenant 48 à 70 % en poids de matériau thermoplastique, 20 à 40 % en poids d'agent de renfort, et 3 à 20 % en poids de minéral.

13. Matériau ablatif selon l'une quelconque des revendications précédentes, comprenant au moins 2 % en poids dudit agent moussant.

14. Matériau ablatif selon l'une quelconque des revendications précédentes, comprenant au moins 3 % en poids dudit agent moussant.

15. Matériau ablatif selon l'une quelconque des revendications précédentes, dans lequel ledit halopolymère est choisi parmi des fluoropolymères, des chloropolymères et des chlorofluoropolymères.

16. Matériau ablatif selon l'une quelconque des revendications précédentes, dans lequel ledit agent moussant comprend du PTFE.

17. Matériau ablatif comprenant 25 à 95 % en poids d'une polyaryléthercétone, 3 à 70 % en poids d'un agent de renfort, 2 à 50 % en poids d'un minéral choisi dans le groupe constitué de talc, vermiculite, mica et quartz, et au moins 1 % en poids d'un agent moussant de polymère halo.

18. Matériau ablatif selon l'une quelconque des revendications précédentes, dans lequel ledit agent de renfort comprend des matériaux organiques et/ou inorganiques sous forme de platey, de fibres et/ou de trichite.

19. Utilisation d'un matériau selon l'une quelconque des revendications 1 à 18, comme matériau ablatif.

20. Utilisation d'un matériau ablatif selon l'une quelconque des revendications 1 à 18, pour dissiper la chaleur d'un substrat.

21. Procédé de dissipation de chaleur d'un substrat, le procédé utilisant un matériau ablatif selon l'une quelconque des revendications 1 à 18.

22. Procédé de préparation d'une structure pour utilisation dans un environnement à haute température, le procédé comprenant l'association à la structure d'un matériau ablatif selon l'une quelconque des revendications 1 à 18.

23. Composant structurel pour utilisation dans un environnement à haute température, ledit composant comprenant un matériau ablatif selon l'une quelconque des revendications 1 à 18.

24. Composant selon la revendication 23, qui comprend un empennage de missile.
